# EUROPÄISCHE PATENTSCHRIFT

(11) **EP 0 499 885 B1**
(45) Veröffentlichungstag und Bekanntmachung des Hinweises auf die Patenterteilung: **14.06.1995**
(21) Anmeldenummer: 92101909.7
(22) Anmeldetag: 05.02.1992
(51) Int. Cl.: F16L 25/00, F16L 47/00

(54) **Rohranschlussteil für Wellrohre**
Connecting element for corrugated pipes
Elément de raccord pour tubes ondulés

(30) Priorität: 20.02.1991 DE 4105266
(43) Veröffentlichungstag der Anmeldung: 26.08.1992
(73) Patentinhaber: FRÄNKISCHE ROHRWERKE, GEBR. KIRCHNER GmbH & Co., D-97486 Königsberg (DE)
(72) Erfinder: Weisgerber, Jürgen, Dipl.-Ing. (FH), W-8721 Schwebheim (DE); Frey, Jürgen, Dipl.-Ing. (FH), W-8478 Teunz (DE)
(74) Vertreter: Schwabe - Sandmair - Marx

(56) Entgegenhaltungen:
- FR-A- 1 394 159
- FR-A- 2 041 895
- FR-A- 2 078 539
- US-A- 3 934 902
- US-A- 4 795 197

## Beschreibung

Die Erfindung bezieht sich auf ein Rohranschlußteil nach dem Oberbegriff des Anspruchs 1.

Ein Rohranschlußteil dieser Art dient dazu, wenigstens ein Wellrohr entweder mit einem anderen Wellrohr oder mit einem anderen Bauteil, z.B. einem Schaltkasten, einem Verteilergehäuse oder einem Steckergehäuse zu verbinden. In seiner einfachsten Form weist das Rohranschlußteil die Form eines Rohrstücks auf, das an seinem einen Ende so geformt und bemessen ist, daß es das zugehörige Ende eines Wellrohres formschlüssig zu übergreifen vermag, und an seinem anderen Ende so geformt und bemessen ist, daß es entweder in ein vorbeschriebenes Gehäuse einschraubbar ist oder auch an diesem Ende das zugehörige Ende eines zweiten Wellrohrabschnitts formschlüssig zu übergreifen vermag.

In der EP-0 086 900 B1 ist ein Anschlußnippel aus Kunststoff für umfangsgerippte Isolierrohre, nämlich sogenannte Wellrohre, beschrieben, wobei der Anschlußnippel an seinem einen Ende einen Einschraubstutzen mit Außengewinde aufweist, mit dem er in ein vorerwähntes Gehäuse einschraubbar ist, und an seinem anderen Ende einen muffenförmigen Anschlußstutzen aufweist, in den das zugehörige Ende des Wellrohres einsteckbar und gegen ein ungewolltes Herausziehen formschlüssig fixierbar ist. Hierzu dient eine in einem Ausschnitt des muffenförmigen Anschlußstutzens radial schwenkbar gelagerte Sicherungszunge, die auf ihrer Innenseite der Außenkontur des Wellrohres angepaßte Nocken aufweist, mit denen sie in ihrer heruntergeklappten Sicherungsposition in die Außenumfangsnuten des Wellrohres einfaßt und letztere somit axial sichert. Im Grund des muffenförmigen Anschlußstutzens ist eine Ringdichtung angeordnet, an der das Stirnende des Wellrohres in seiner eingesteckten Position anliegt. Dieses bekannte Rohranschlußteil ist aufgrund seiner komplizierten Form, die unter anderem durch die Sicherungszunge vorgegeben ist, schwierig herzustellen und deshalb teuer. Es ist auch nicht möglich, dieses Rohranschlußteil mit mehr als zwei Anschlüssen zu versehen. Aufgrund des Vorhandenseins der Ringdichtung im muffenförmigen Anschlußstutzen ist zwar eine gewisse Abdichtung gegen Feuchtigkeit und Nässe vorhanden, jedoch wird diese Abdichtung höheren Forderungen nicht gerecht.

Eine andere Anschlußarmatur für flexible Wellschläuche ist in der DE 31 04 518 C2 beschrieben. Bei dieser bekannten Ausgestaltung ist ein separates, aus zwei Halbschalen bestehendes Sicherungselement zur Arretierung des Wellrohrs an der Anschlußarmatur vorgesehen. Das Sicherungselement umgreift in der zusammengeklappten Position seiner Halbschalen das Wellrohr, wobei an den Innenseiten der Halbschalen vorgesehene Sicherungsstege in die Umfangsnuten des Wellrohrs einfassen, und die Halbschalen gleichzeitig einen Ringwulst der Anschlußarmatur übergreifen, wodurch das Wellrohr mittels des aus zwei Halbschalen bestehenden Sicherungsringes an der Anschlußarmatur axial festgelegt ist. Bei dieser bekannten Armatur sind die Halbschalen des Sicherungsteils durch ein Filmscharnier miteinander verbunden. Folglich ist dieses bekannte Rohranschlußteil zweiteilig, wobei unter Berücksichtigung der schwierigen Herstellung des Anschlußarmaturkörpers ebenfalls hohe Herstellungskosten vorgegeben sind, und nur eine sehr geringe Abdichtung gegen Nässe und Feuchtigkeit erreichbar ist.

Ein weiteres ähnliches Rohranschlußteil ist auf den Seiten A 52 und A 53 des Katalogs A 101 der Firma Josef Schlemmer GmbH, D-8011 Poing beschrieben. Bei dieser bekannten Ausgestaltung ist das eine Anschlußende des Rohranschlußteils ein viereckiger Anschlußflansch, der an ein Gehäuse oder dergleichen anschraubbar ist. Das das Wellrohr formschlüssig haltende Sicherungsteil wird durch zwei separate Halbschalen gebildet, die einen Kragen des Anschlußflansches formschlüssig übergreifen und gleichzeitig mittels innenseitigen Vorsprüngen formschlüssig in die Umfangsnuten des Wellrohrs einfassen. Die beiden Halbschalen sind durch Schrauben miteinander verbunden. Für einen flüssigkeits- und gasdichten Anschluß ist zwischen einem Dichtungsflansch und einer Dichtungsfläche ein O-Ring einzulegen und eine dauerelastische Dichtungsmasse in der Hohlkehle zwischen dem Kragen und dem ringförmigen Sicherungsteil abzulegen. Bei dieser bekannten Ausgestaltung sind die Sicherungsnocken des Sicherungsteils gewindeförmig hintereinanderliegend angeordnet. Hierdurch soll nach dem Einführen des Wellrohrs in das Sicherungsteil und nachfolgendem Drehen des Wellrohrs ein Anziehen und Festziehen des Wellrohrs möglich sein.

In dem Katalog "Biegsames Schutzschlauchsystem aus Kunststoff" der Firma Critchley Limited, in Brimscombe, England GL 5 2 TH, ist ein Rohranschlußteil der gattungsbildenden Art für Wellrohre beschrieben, das eine T-Form aufweist und somit drei Anschlußenden für jeweils ein Wellenrohr aufweist. Die einander gleichen Anschlußenden sind jeweils durch einen Anschlußstutzen mit Außengewinde gebildet, auf den nach dem Einführen des zugehörigen Wellrohrendes eine Überwurfmutter aufschraubbar ist, wobei zwischen dem Anschlußstutzen und der Überwurfmutter ein O-Ring für Abdichtung sorgen soll. Bei dieser bekannten Ausgestaltung besteht das Rohranschlußteil aus zwei Halbschalen, deren Teilungsfuge in der gemeinsamen Ebene der Anschlußenden verläuft. Infolgedessen verläuft die Teilungsfuge auch längs durch die Anschlußstutzen und das Außengewinde.

Zwecks Positionierung der beiden Halbschalen aneinander ist in der einen Halbschale eine Nut in der Teilungsfläche vorgesehen, die sich jeweils von dem einen Anschlußstutzen bis zum benachbarten bzw. gegenüberliegenden Anschlußstutzen erstreckt, und in der anderen Halbschale ist im Bereich der Teilungsfläche jedes Wandungsrandes ein Steg vorgesehen, der in die zugehörige Nut einfaßt. Bei dieser bekannten Ausgestaltung erfolgt die axiale Fixierung der Wellrohre durch Klemmen in den innen hohlzylindrischen Anschlußstutzen mittels der zugehörigen Überwurfmutter, die auch die Halbschalen miteinander verbindet. Eine Abdichtung ist bei dieser bekannten Ausgestaltung nicht erreichbar, weil Nässe und Feuchtigkeit im Bereich der Teilungsfuge zwischen den Wandungsrändern einzudringen vermag. Außerdem ist diese bekannte Ausgestaltung unter Berücksichtigung der jeweils erforderlichen Überwurfmutter vielgliedrig, wodurch ebenfalls hohe Herstellungskosten vorgegeben sind. Ferner führt das Aufschrauben der Überwurfmuttern zu einem großen Montage- bzw. Demontageaufwand, wobei beim Festziehen der Überwurfmuttern durch unsachgemäße Behandlung die Gefahr von Beschädigungen der Verbindung besteht.

Es ist von der Anmelderin bereits in der älteren, nicht vorveröffentlichten Anmeldung P 40 04 564 ein aus zwei Halbschalen bestehendes Rohranschlußteil der eingangs angegebenen Art vorgeschlagen worden, bei dem die Teilungsfuge ebenfalls durch die Anschlußstutzen für das Wellrohr verläuft. Auf den Innenwandungen der aufgrund der Ausführung in zwei Halbschalen ebenfalls schalenförmigen Anschlußstutzenhälften sind Vorsprünge vorgesehen, die in der zusammengesetzten Position der Halbschalen formschlüssig in die Außennuten der Wellrohre einfassen. Zur Befestigung der Halbschalen aneinander sind ineinandergreifende Verrastungselemente an den Halbschalen vorgesehen. Überwurfmuttern sind bei dieser Ausgestaltung aufgrund des formschlüssigen Eingriffs der Anschlußstutzenhalbschalen in die Wellrohre nicht erforderlich. Zwar ist dieses Rohranschlußteil ebenfalls zweiteilig, jedoch läßt es sich aufgrund seiner geteilten Ausführung mit einem relativ geringen Herstellungsaufwand herstellen, wobei es auch für ein Kunststoff-Spritzgußwerkzeug für die Halbschalen verhältnismäßig einfacher Formgebungen bedarf. Dieses Rohranschlußteil läßt sich somit kostengünstig herstellen und auch mit einem geringen Handhabungs- und Zeitaufwand montieren bzw. demontieren. Allerdings ist bei diesem Anschlußteil kein Augenmerk auf eine Abdichtung gelegt worden. Die in der deutschen Norm DIN 40050 angegebenen höheren Schutzgrade etwa ab IP 54 für den Berührungs- und Fremdkörperschutz und für den Wasserschutz können somit nicht erfüllt werden.

Ein anderes Rohranschlußteil ist aus der FR-A-1 394 159 bekannt. Es weist Anschlußenden, hohlzylindrische Anschlußstutzen, sowie zwei in einer Ebene geteilte Halbschalen auf, die in Ihrer zusammengebauten Position, in der ihre Schalenwandränder aneinanderliegen miteinander verbindbar sind. Bei diesem bekannten Rohranschlußteil sind auf den nach innen gewandten Rändern der Halbschalen mehrere Nuten bzw. Federn vorgesehen, die eine Arretierung und genaue Positionierung der Halbschalen gegeneinander sicherstellen.

Da sowohl die Halbschalen, als auch die Nuten und Federn aus einem elastischen Material hergestellt sind, können Nuten und Federn selbstklemmend ineinander gedrückt werden.

Da jedoch keine weiteren Dichtungsprofile vorgesehen sind, benachbarte Nuten oder Federn nicht ohne Unterbrechung nebeneinanderliegen und an den Anschlußenden keine Dichtungshalbringe vorgesehen sind, ist die gemäß obiger Druckschrift bekannte Vorrichtung gegenüber von außen eindringender Feuchtigkeit und Flüssigkeiten nicht definiert dicht.

Der Erfindung liegt die Aufgabe zugrunde, bei einem Rohranschlußteil der eingangs angegebenen Art die Abdichtung zu verbessern.

Diese Aufgabe wird durch die Merkmale des Anspruchs 1 gelöst. Vorteilhafte Weiterbildungen der Erfindung sind in den Unteransprüchen beschrieben.

Beim erfindungsgemäßen Rohranschlußteil ist im Bereich der Anschlußstutzen jeweils eine Ringdichtung und im Bereich der Teilung der einander zugewandten axialen Rohrwandungsränder jeweils eine Dichtungslippe bzw. ein Dichtungsband vorgesehen, wodurch sich der Innenraum des Rohranschlußteils völlig abdichten läßt, so daß weder Feuchtigkeit, Nässe oder auch Wasser eindringen kann. Dabei ist es von Vorteil, die Dichtungsbänder einteilig mit den Ringdichtungen zu verbinden, so daß die Dichtung in Form eines einteiligen Dichtungselementes vorliegt. Hierdurch entfallen zusätzliche Stoßfugen zwischen den Dichtungsbändern und den Ringdichtungen, wodurch zusätzliche mögliche Leckstellen vermieden werden. Die Ringdichtungen und die Dichtungsbänder sind in ihrer Querschnittsgröße so bemessen, daß sie beim fertigmontierten Rohranschlußteil mit Druck bzw. mit einer elastischen Spannung an der Umfangswand des zugehörigen Wellrohrs (soweit die Ringdichtungen betroffen sind) und an der jeweils gegenüberliegenden Teilungsfläche (soweit die Dichtungsbänder betroffen sind) anliegen. Dabei läßt sich die Montage und Demontage dann wesentlich vereinfachen, wenn die Ringdichtungen in Übereinstimmung mit der Teilungsfuge des Rohranschlußteils ebenfalls axial geteilt sind. Dies ermöglicht es, die Dichtungshälften vor dem Aneinandersetzen der Halbschalen jeweils an der zugehörigen Halbschale anzubringen. Hierdurch läßt sich insbesondere die Montage wesentlich vereinfachen. Vorzugsweise sind die Dichtungsteile an die Halbschalen angespritzt oder angeformt, was durch Zweikomponenten-Spritzverfahren durchgeführt werden kann, bei denen die Dichtungsteile durch Anspritzen eines geeigneten Dichtungskunststoffes, vorzugsweise eines thermoplastischen Elastomers, an den Kunststoff der Anschlußteilschalen gebildet bzw. daran angebracht werden. Vorzugsweise sind die Anschlußteilschalen bei ihrer Vorfertigung als Zwischenprodukte mit Ausnehmungen versehen, in denen die Dichtungsteile eingebettet sind. Hierdurch erhalten die Dichtungsteile eine Verankerung und somit einen festen Sitz.

In dem Fall, in dem die Ringdichtungen axial geteilt sind, ist es vorteilhaft, deren Teilungsflächen mit einem Übermaß zu versehen, so daß sie über die Teilungsflächen der Halbschalen geringfügig vorstehen. Hierdurch werden die Ringdichtungshälften im montierten Zustand im Bereich ihrer Teilungsflächen zusammengepreßt, wodurch eine Abdichtung auch gegen unter Außendruck stehende Flüssigkeit erreicht wird, wie es z.B. bei Spritzwasser oder unter Druck stehendem Wasser der Fall ist.

Die Erfindung läßt sich sowohl bei einfachen axialen Rohranschlußteilen mit zwei einander gegenüberliegenden Anschlußenden als auch solchen mit mehr als zwei Anschlußenden in einfacher und wirkungsvoller Weise verwirklichen, wie es z.B. bei T- oder Y-förmigen Abzweigteilen der Fall ist. Die Erfindung ermöglicht eine Abdichtung des Rohranschlußteils, die die IP-Schutzarten IP 54 und höher nach DIN 40 050 erfüllt.

Nachfolgend wird die Erfindung anhand von in einer Zeichnung dargestellten bevorzugten Ausführungsbeispielen näher erläutert. Es zeigt:
- Fig. 1: eine Halbschale mit Blickrichtung auf ihre Teilungsebene eines aus zwei solchen Halbschalen bestehenden Rohranschlußteils;
- Fig. 2: die Halbschale nach Figur 1 in der Seitenansicht;
- Fig. 3: die Halbschale nach Figur 1 in der Draufsicht;
- Fig. 4: die in Fig. 1 mit X gekennzeichnete Einzelheit in vergrößerter Darstellung;

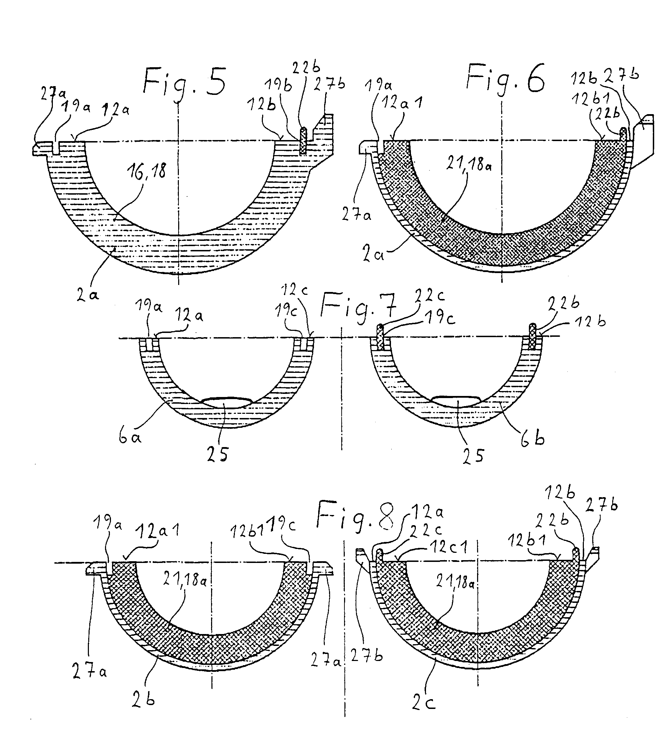

- Fig. 5: den Schnitt A-B in Figur 1;
- Fig. 6: den Schnitt C-D in Figur 1;
- Fig. 7: den Schnitt E-F in Figur 1;
- Fig. 8: den Schnitt G-H in Figur 1;
- Fig. 9: zwei durch ein Filmscharnier miteinander verbundene Halbschalen in aufgeklappter Position mit Blickrichtung auf ihre Teilungsebene für ein erfindungsgemäßes Rohranschlußteil in abgewandelter Ausgestaltung;
- Fig. 10: den Schnitt I-K in Figur 9 in vergrößerter Darstellung;
- Fig. 11: den Schnitt L-M in Figur 9 in vergrößerter Darstellung.
- Fig. 12: eine Halbschale, mit Blick auf deren Teilungsebene, eines Rohranschlußteils gemäß einer weiteren Ausführungform, die als Verteilerstück mit sechs Abzweigungen (drei an jeder Seite) ausgebildet ist; und
- Fig. 13: eine Halbschale, mit Blick auf deren Teilungsebene, eines als Verbindungsstück mit Klemmraum ausgebildeten Rohranschlußteil gemäß einer weiteren Ausführungsform der Erfindung.

Die Halbschale 1 bildet mit einer nicht dargestellten, im wesentlichen gleichen Halbschale ein Rohranschlußteil in Form eines sogenannten Y-Verbinders mit drei Anschluß-Stutzen, die jeweils durch Anschluß-Stutzenhalbschalen 2a, 2b, 2c an einer Halbschale 1 gebildet sind und deren Achsen in der Teilungsebene 4 liegen. In die Stutzenschalen 2a, 2b, 2c sind die zugehörigen Enden von nicht dargestellten Wellrohren einsetzbar. Die Stutzenhalbschale 2a ist in ihrem Radius größer bemessen als die anderen beiden einander gleichen Stutzenhalbschalen 2b, 2c, deren Längsmittelachsen 3b, 3c zur Stutzenhalbschale 2a hin symmetrisch zu deren Längsmittelachse 3a konvergieren und einen Winkel von etwa 30° einschließen.

Die Hauptteile der Halbschale 1 sind die drei Stutzenhalbschalen 2a, 2b, 2c, und ein letzteres beide miteinander verbindendes Hosenstück 5, das aus zwei keilförmig zueinander angeordneten Rohrhälften 6a, 6b besteht, deren Rohrwände 7a, 7b in einer senkrecht zur Teilungsebene 4 und in der Achse 3a der Stutzenhalbschale 2a verlaufenden Längsmittelebene 8 ineinander übergeben. Zwischen den Stutzenhalbschalen 2b, 2c sind die Rohrwände 7a, 7b durch eine in der Teilungsebene 4 halbkreisförmig gekrümmte und dann abflachend in die Rohrwände 7a, 7b übergehende Verbindungsrohrwand 7c miteinander verbunden. Die Halbschale 1 ist somit nur an den Öffnungen der Stutzenhalbschalen 2a, 2b, 2c offen. Die Stutzenhalbschale 2a, 2b, 2c bildet bezüglich der Längsmittelebene 8 zwei seitliche, in Längsrichtung durchgehende Schalenränder 11a, 11b und zwischen den Stutzenhalbschalen 2b, 2c einen Schalenrand 11c in der Form eines spitzen Winkels mit gerundeter Spitze, wobei die Schalenränder 11a, 11b, 11c in der Teilungsebene 4 liegen und durch Teilungsflächen 12a, 12b, 12c begrenzt sind.

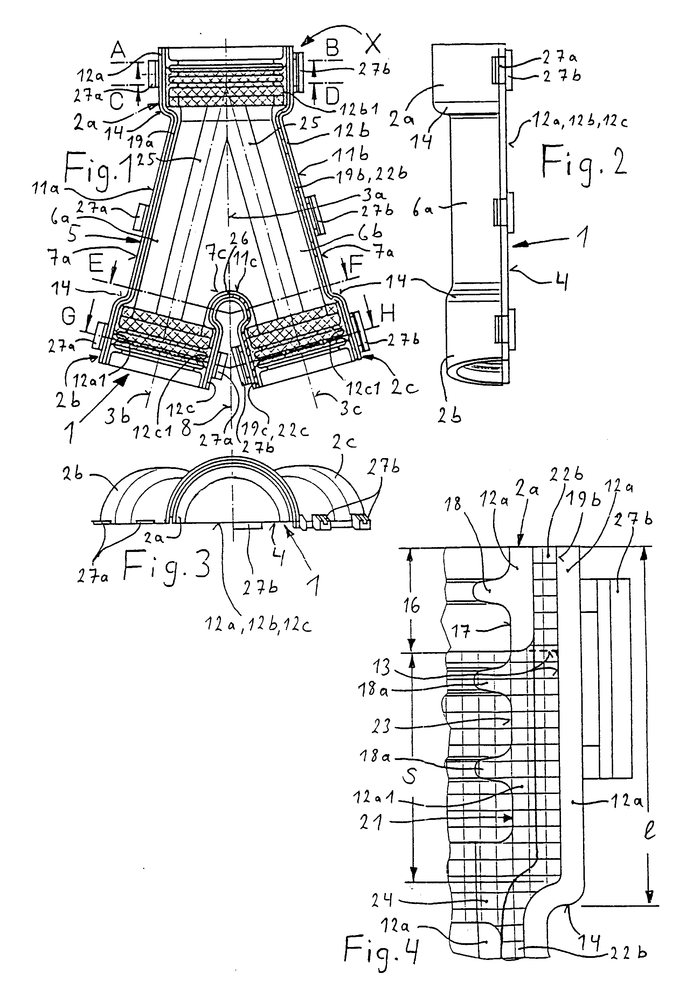

Wie insbesondere aus Fig. 4 deutlich wird, weist jede Stutzenhalbschale 2a, 2b, 2c eine Längserstreckung 1 von der Vorderkante bis zu einer Erweiterungsstufe 14 (siehe auch Fig. 1) auf. Im vorderen oder äußeren Abschnitt ist eine halbringförmige, radial nach innen vorspringende Stufe 17 mit einer Axiallänge 16 der Stutzenhalbschale 2a, 2b bzw. 2c vorgesehen, und an die Stufe 17 schließt sich in Axialrichtung weiter nach hinten oder innen eine halbringförmige Ausnehmung 13 an, die einen größeren freien Durchmesser als die Stufe 17 hat; die axiale Länge der Ausnehmung 13 ist mit "S" bezeichnet. Die Stufe 17 besteht aus demselben Material wie die Stutzenhalbschale und ist mit einem halbringförmigen, nach innen vorspringenden Arretiersteg 18 versehen, dessen Form und Größe an ein zugehöriges Wellrohr angepaßt sind.

In den Teilungsflächen 12a, 12b, 12c der Schalenwandränder 11a, 11b, 11c sind in Längsrichtung dieser Ränder verlaufende Dichtungsnuten 19a, 19b, 19c vorgesehen, die vorzugsweise mittig zur dazugehörigen Teilungsfläche 12a, 12b, 12c und durchgehend verlaufen und somit in den halbringförmigen Ausnehmungen 13 auslaufen. Vorzugsweise sind die Dichtungsnuten 19a, 19b, 19c auch in den Endbereichen der Stutzenhalbschalen 2a, 2b, 2c in den zugehörigen Teilungsflächenabschnitten vorgesehen, wobei sie endseitig und in die jeweils benachbarte Ausnehmung 13 auslaufen können. Die Dichtungsnuten 19a, 19b, 19c weisen vorzugsweise einen viereckigen, insbesonderen rechteckigen Querschnitt auf, dessen Tiefe größer ist als dessen Breite. Die somit beschriebene Halbschale 1 besteht aus einem verhältnismäßig festen Kunststoff, wie es z.B. bei Rohren üblich ist, und sie ist in einer Form gespritzt.

Der Halbschale 1 ist eine Abdichtung zugeordnet, die aus im Bereich der Stutzenhalbschalen 2a, 2b, 2c angeordneten Dichtungshalbringen und den Schalenwandrändern 11b, 11c zugeordneten Dichtungsbändern oder Dichtungslippen 22b, 22c besteht. Die Dichtungshalbringe 21 sind in den halbringförmigen Ausnehmungen 13 angeordnet, wobei sie den Querschnitt der halbringförmigen Ausnehmungen 13 ausfüllen. Die halbzylindrische Innenfläche 23 der Dichtungshalbringe 21 ist in ihrer Größe geringfügig kleiner als die Innenfläche 17 des Ringstegs 16 und somit auch geringfügig kleiner als die Außenumfangsfläche des zugehörigen Wellrohrs. Auf der Innenfläche 23 der Dichtungshalbringe 21 sind halbringförmige Arretierstege 18a vorgesehen, deren Abstand voneinander dem Abstand zwischen dem halbringförmigen Arretiersteg 18 und dem ihm benachbarten Arretiersteg 18a und dem Abstand der Außenumfangsrillen des zugehörigen Wellrohrs angepaßt ist. In seinem inneren Endbereich weist jeder Dichtungshalbring 21 einen halbringförmigen Ringsteg 24 auf, der kleiner als der Außendurchmesser, jedoch größer als der Innendurchmesser des zugehörigen Wellrohrs ist. Im Bereich des Rohrwellentales wird das üblicherweise in einem Wellental abgeschnittene Wellrohr axial gegen den scharfkantigen Ringsteg 24 angedrückt.

Die Dichtungslippen 22b, 22c an den Schalenwandrändern 11b, 11c befinden sich in den zugehörigen Dichtungsnuten 19b, 19c, wobei sie einstückig mit den Dichtungshalbringen 21 der Stutzenhalbschalen 2a, 2c verbunden sind. Vorzugsweise erstrecken sich die Dichtungslippen 22 - insbesondere der Form der Erweiterungsstufe 14 folgend - bis zu den Stirnflächen der Stutzenhalbschalen 2a, 2c, wobei die Dichtungslippe 22c am Schalenwandrand 11c der in Figur 1 rechten Stutzenhalbschale 2c zugeordnet ist und sich in Richtung auf die Stutzenhalbschale 2b nur bis zur Längsmittelebene 8 erstreckt. Die Dichtungsnut 19a ist unbesetzt.

Die Dichtungshalbringe 21 und die Dichtungslippen 22b, 22c sind durch Spritzgiessen an die Halbschale 1 angespritzt bzw. angeformt, wobei für die Halbschale 1 ein Kunststoff verwendet wird, der eine verhältnismäßig große Festigkeit aufweist, während für die Dichtungsteile ein Kunststoff verwendet wird, der elastisch ist. Vorzugsweise wird für die Dichtungsteile ein thermoplastisches Elastomer (TPE) verwendet. Die Herstellung der Halbschale 1 mit den Dichtungsteilen erfolgt durch Mehrkomponenten-Spritzgiessen. Hierbei wird das Spritzgießwerkzeug mit zwei unabhängig voneinander steuerbaren Spritzeinheiten ausgerüstet, mittels denen die verschiedenen Kunststoffe unter Berücksichtigung spezieller Maßnahmen so eingespritzt werden, daß sie jeweils die ihnen zugeordneten Raumbereiche des Formraums des Spritzgießwerkzeuges einnehmen.

Vorzugsweise sind die Dichtungshalbringe 21 durch sogenannte Fließstege 25 aus dem gleichen Material verbunden, die sich vorzugsweise im Grund der Rohrhälften 6a, 6b befinden. Der Formraum des Spritzgießwerkzeugs weist hierzu entsprechende Formraumkanäle auf, die Formraumteile für die Fliesstege 25 begrenzen. Diese Ausgestaltung ermöglicht es, ggfs. jeweils nur eine Zuführungsöffnung für das zugehörige Material im Spritzgießwerkzeug vorzusehen, wobei die die Fliesstege 25 begrenzenden Formraumbereiche eine gute Verteilung des Materials im Gesamtformraum gewährleisten.

Die zweite nicht dargestellte Halbschale ist mit der Halbschale 1 identisch ausgebildet und zwar auch bezüglich der Dichtungshalbringe 21 und Dichtungslippen 22b, 22c. Aufgrund dieser Ausgestaltung lassen sich die beiden Halbschalen zu einem kompletten Rohranschlußteil zusammensetzen, wobei ihre Teilungsflächen 12a, 12b, 12c aneinanderliegen. In dieser Position fassen die Dichtungslippen 22b, 22c der nicht dargestellten Halbschale 1 in die Dichtungsnuten 19a, 19c der dargestellten Halbschale 1 ein, die vor der Zusammensetzung der Halbschalen unbesetzt waren. Dabei liegen die Dichtungslippen 22c der beiden Halbschalen an einer gemeinsamen Stoßfuge 26 aneinander an, die sich in der Längsmittelebene 8 befindet.

Um eine gute Abdichtung zu gewährleisten, ist es vorteilhaft, die Dichtungshalbringe 21 und Dichtungslippen 22b, 22c mit einem geringen Übermaß zu fertigen, so daß sie in der zusammengesetzten Position der Halbschalen komprimiert werden, um die Abdichtung zu gewährleisten. Das Übermaß kann sich auf die halbringförmigen Dichtungsstege 18a, also auf deren Axialmaß und deren Radialmaß beschränken. Soweit die Dichtungslippen 22b, 22c betroffen sind, wird eine gute Abdichtung erreicht, wenn die aus den zugehörigen Teilungsflächen 12b, 12c herausragenden Dichtungslippen 22b, 22c höher bemessen sind als die Tiefe der zugehörigen Dichtungsnuten, wodurch die angestrebte Kompression erreicht wird.

Aus den gleichen Gründen ist es auch vorteilhaft, die Teilungsflächen 12a1, 12b1, 12c1 der Dichtungshalbringe 21 ebenfalls mit einem Übermaß bezüglich der Teilungsflächen 12a, 12b, 12c zu fertigen, so daß die Dichtungshalbringe 21 im Bereich ihrer Teilungsflächen 12a1, 12b1, 12c1 mit einer Kompressionsspannung aneinanderliegen, wenn die Halbschalen zusammengesetzt sind.

An den Schalenwandrändern 11a, 11b sind angeformte Verrastungselementenpaare vorgesehen, deren Verrastungselemente 27a, 27b in der zusammengesetzten Position der Halbschalen vorzugsweise lösbar verrasten. Bei der vorliegenden Ausgestaltung sind solche Verrastungselemente 27a, 27b im Bereich jeder Stutzenhalbschale 2a, 2b, 2c und im mittleren Bereich der Rohrhälften 6a, 6b vorgesehen.

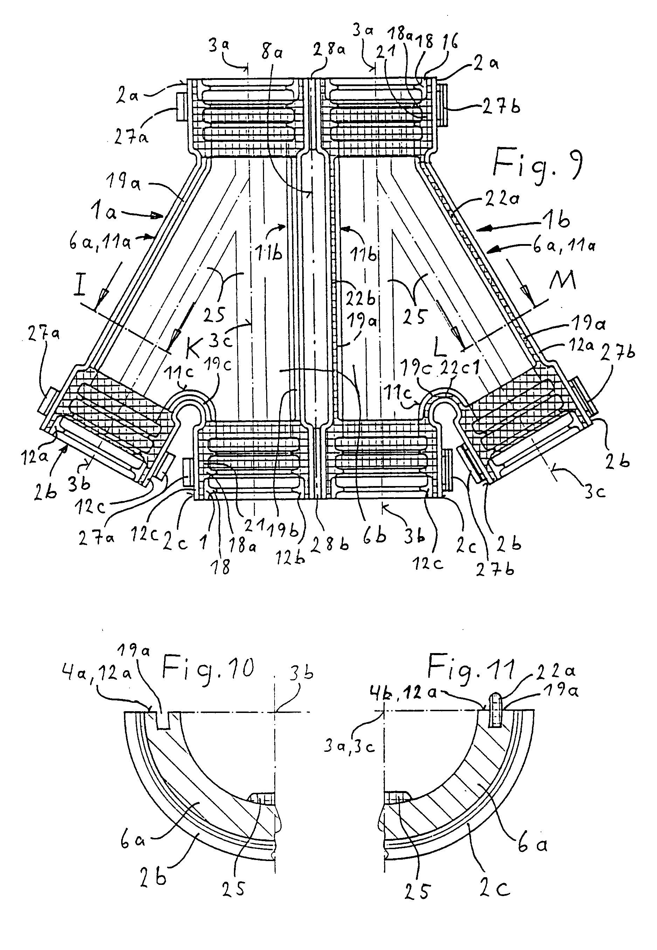

Die Ausgestaltung nach den Figuren 9 bis 11, bei der gleiche oder vergleichbare Teile mit gleichen Bezugszeichen versehen sind, wobei beide Halbschalen 1a, 1b des Rohranschlußteils dargestellt sind, unterscheidet sich im wesentlichen dadurch, daß die Halbschalen 1a, 1b bzw. das Rohranschlußteil die Form eines Abzweigs mit beispielsweise gleichgroßen Stutzenhalbschalen 2a, 2b, 2c aufweist, bei denen die Stutzenhalbschalen 2a, 2c jeweils miteinander fluchten, während die Stutzen 2b entsprechend divergieren und einen Abzweig bilden. Aufgrund der fluchtenden Anordnung der Stutzenhalbschalen 2a, 2c ist ein gerader Durchgang gebildet. Diese Ausgestaltung eignet sich dazu, die beiden Halbschalen 1a, 1b durch ein Filmscharnier mit zwei Filmscharnierteilen 28a, 28b zu verbinden, die an den einander zugewandten Schalenwandrändern 11b im Bereich der Stutzenhalbschalen 2a, 2c angeordnet sind. Dabei sind diese beiden Halbschalen 1a, 1b - abgesehen von den Dichtungslippen - bezüglich einer Längsmittelebene 8a, die senkrecht zu den in einer Ebene liegenden Teilungsebenen 4a, 4b steht und durch die Gelenkachsen der Filmscharnierteile 28a, 28b verläuft, spiegelsymmetrisch ausgebildet. Eine Ausnahme hiervon machen die Dichtungslippen, die hier komplett an einer Halbschale, nämlich der Halbschale 1b angeordnet sind, während die Halbschale 1a nur die Dichtungsnuten 19a, 19b, 19c aufweist. Daher sind bei der Halbschale 1b alle Dichtungsnuten 19a, 19b, 19c mit Dichtungslippen 22a, 22b, 22c1 besetzt. Die Dichtungslippe 22c1 ist gegenüber dem vorbeschriebenen Ausführungsbeispiel deshalb mit einem anderen Bezugszeichen versehen, weil diese Dichtungslippe 22c1 sich in der zugehörigen Dichtungsnut 19c durchgehend von einem zum anderen Dichtungshalbring 21 in den Stutzenhalbschalen 22b, 22c erstreckt.

Da es bei dieser Ausgestaltung an der Seite, an der die Filmscharnierteile 28a, 28b angeordnet sind, keiner Verrastungselemente 27a, 27b bedarf, sind letztere nur an den Schalenwandrändern 11a angeordnet.

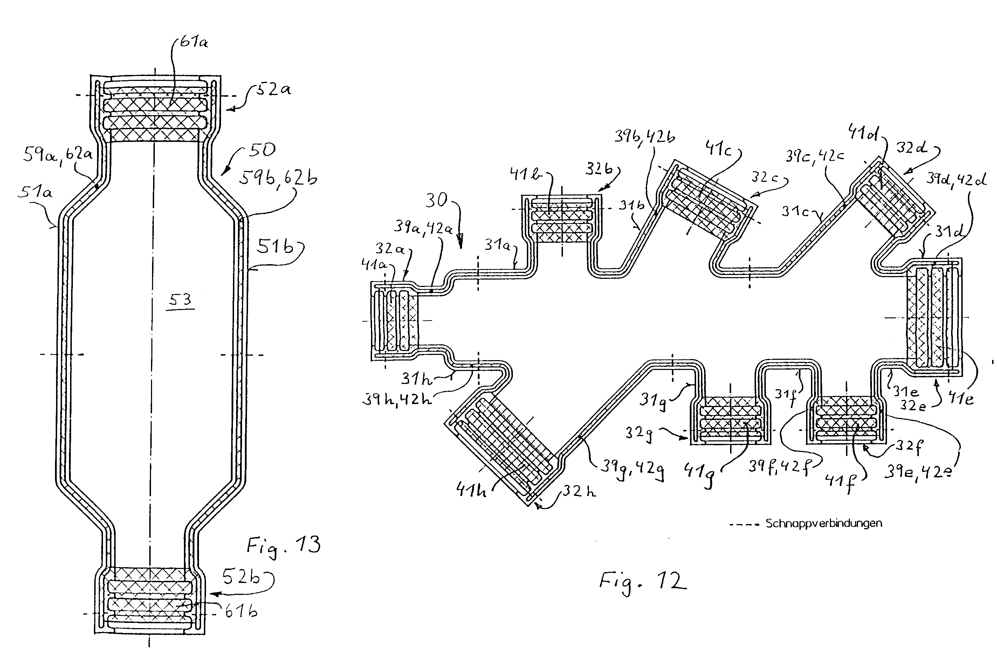

In Fig. 12 ist eine weitere Ausführungsform einer Halbschale 30 der Erfindung dargestellt. Hierbei handelt es sich um ein Verteilerstück, das an beiden Enden zur Aufnahme von Wellrohren unterschiedlichen Durchmessers ausgebildet ist und an jeder Seite je drei Abzweigungen mit teilweise unterschiedlichen Nennweiten aufweist.

Die Halbschale 30 dieses Verteilerstücks weist am in Fig. 12 linken Ende eine Stutzenhalbschale 32a mit einer Nennweite von 10 mm auf und am rechten Ende eine Stutzenhalbschale 32e mit einer Nennweite von 17 mm. In der oberen Hälfte der Fig. 12 sind drei Stutzenhalbschalen 32b, 32c und 32d erkennbar, die eine Nennweite von 10 mm, 17 mm bzw. 10 mm aufweisen. Die drei in der unteren Hälfte der Fig. 12 abzweigenden Stutzenhalbschalen 32f, 32g und 32h weisen Nennweiten von 10 mm, 10 mm bzw. 17 mm auf. Die Dichtungshalbringe für die Stutzenhalbschalen sind mit den Bezugsiffern 41a (für die Stutzenhalbschale 32a), 41b, 41c, 41d, 41e, 41f, 41g bzw. 41h (für die Stutzenhalbschale 32h) bezeichnet. Die Abdichtung in den Halbschalenrändern erfolgt durch in Nutabschnitten verlaufende Dichtungslippen wie bei den voranstehenden Ausführungsformen. Hierzu sind Nutabschnitte 39a, 39b, ..., 39h vorgesehen, in denen jeweils eine Dichtlippe 42a, 42b, ..., 42h einsitzt. Die Abschnitte der Schalenränder der Halbschale 30 sind mit den Bezugsziffern 31a, 31b, ..., 31h bezeichnet. Die zur Halbschale 30 korrespondierende (nicht dargestellte) andere Halbschale kann ebenso ausgebildet sein wie die Halbschale 30, also mit Dichtungslippen, so daß die Halbschale 30 und die hierzu korrespondierende andere Halbschale mit den jeweiligen Dichtungslippen aufeinander stoßen, jedoch kann auch die (nicht dargestellte) andere Halbschale keine Dichtlippen aufweisen, sondern nur Nutabschnitte, in welche dann die Dichtungslippen 42a, 42b, ..., 42h der Halbschale 30 eingreifen. Die Dichtungshalbringe 41a - 41h sind in der nicht dargestellten Halbschale auf jeden Fall vorhanden.

Eine weitere Ausführungsform der Erfindung ist in Fig. 13 dargestellt. Eine Halbschale 50 eines Verbindungsstücks mit einem Klemmraum 53 zur Aufnahme beispielsweise einer elektrischen Steckverbindung weist eine erste Stutzenhalbschale 52a mit einer Nennweite von 13 mm auf sowie eine zweite Stutzenhalbschale 52b mit einer Nennweite von 10 mm. In diesen Stutzenhalbschalen sind - wie bei den voranstehenden Ausführungsformen - Dichtungshalbringe angeordnet, und zwar ein Dichtungshalbring 61a in der Stutzenhalbschale 52a und ein Dichtungshalbring 61b in der Stutzenhalbschale 52b. Für die Abdichtung entlang den Halbschalenwandrändern 51a, 51b sind Nutabschnitte 59a, 59b vorgesehen, in denen jeweils eine Dichtungslippe 62a bzw. 62b einsitzt. Für die korrespondierende, nicht in Fig. 13 dargestellte zweite Halbschale gilt entsprechend, was voranstehend in bezug auf Fig. 12 ausgeführt wurde.

Für die Wahl des Materials der Halbschalen einerseits und der Dichtungsmittel andererseits, also der Dichtungshalbringe und der Dichtungslippen, gilt bezüglich sämtlicher voranstehender Ausführungsformen der vorliegenden Erfindung folgendes: Grundsätzlich wird man für die Halbschalen ein härteres und für die Dichtungsmittel ein weicheres Material wählen und diese beiden Materialien aufeinander abstimmen. Bei den Dichtungsmitteln muß bezüglich der Materialwahl üblicherweise ein Kompromiß erfolgen, nämlich eine Abstimmung der Härte der Dichtmittel (die für eine ordnungsgemäße Abdichtung möglichst weich sein sollten) und der jeweils erforderlichen Temperaturbeständigkeit (Dichtmaterialien, wie z.B. TPE, werden üblicherweise mit steigender Temperaturbeständigkeit härter).

Für bestimmte Einsatzzwecke und Verwendungsarten lassen sich jedoch gegebenenfalls besonders günstige Materialpaarungen ermitteln. Werden beispielsweise die Halbschalen aus klassischem Polyamid gefertigt, welches normalerweise keine chemische Verbindung mit einem Elastomer-Material (Dichtungsmittel) eingeht, so erhält man eine Kombination, bei welcher die Dichtmittel nur mechanisch mit den Halbschalen verankert sind. Ein Beispiel für ein geeignetes Elastomer-Material ist etwa TPE. In Folge der nur mechanischen Verbindung zwischen Halbschale und Dichtungsmittel lassen sich derartige Ausführungsformen besonders gut entsorgen, da die Dichtmittel von den Halbschalen wieder mechanisch einfach und preiswert getrennt werden können und so eine sortenreine Trennung der Bestandteile erfolgen kann. Die Halbschalen aus Polyamid können recycled und das Dichtungsmittel anderweitig verwendet werden, z.B. als Füllstoff.

Wird dagegen eine festere Verbindung der Dichtmittel mit den Halbschalen gewünscht, so läßt sich für die Halbschalen z.B. ein gefülltes Polypropylen-Material verwenden und als Dichtungsmittel ein TPE-Elastomer. TPE, also ein Copolymer aus Polypropylen und einem Olefin-Dien-Terpolymer weist in Folge des Polypropylenanteils eine gewisse Materialähnlichkeit mit dem gefüllten Polypropylen auf, aus welchem die Halbschalen hergestellt sind, und daher kommt es zu einer gewissen Verbindung durch Verschmelzen zwischen dem Halbschalenmaterial und dem Elastomer-Material.

Die voranstehenden Ausführungsformen machen den breiten Einsatzbereich der vorliegenden Erfindung deutlich. In jedem Falle wird eine dichte Abdichtung durch miteinander verrastende Einzelteile erreicht, wobei der gesamte freie Querschnitt der zu verbindenden Wellrohre oder Wellrohrabschnitte nutzbar bleibt und eine einfache Montage der Leitungen, Kabel und dergleichen möglich ist, die in den Wellrohren bzw. den Verbindungs- und Verteilerstücken gemäß der vorliegenden Erfindung verlaufen.

## Patentansprüche

1. Rohranschlußteil für Wellrohre, mit Wenigstens zwei Anschlußenden, von denen wenigstens ein Anschlußende durch einen hohlzylindrischen Anschlußstutzen gebildet ist, und mit mindestens zwei in mindestens einer Ebene (4) geteilten Halbschalen (1; 1a, 1b), die in ihrer aneinander gesetzten Position, in der ihre Schalenwandränder (11a, 11b, 11c) aneinanderliegen, miteinander verbindbar sind, dadurch **gekennzeichnet**, daß in jeder Stutzenhalbschale (2a, 2b, 2c) ein Dichtungshalbring (18a, 21) aus elastischem Material und in geschlossenem Zustand der Halbschalen jeweils zwischen den einander zugewandten Schalenwandrändern (11a, 11b, 11c) im Bereich der Teilungsflächen (12a, 12b, 12c) ein sich in der Längsrichtung der zugehörigen Schalenwandränder erstreckendes Dichtungsprofil (22b, 22c; 22a, 22b, 22c1) aus elastischem Material angeordnet ist, wobei das elastische Material jeweils aus einem weicheren Material besteht als die Halbschalen.

2. Rohranschlußteil nach Anspruch 1, dadurch gekennzeichnet, daß in den Stutzenhalbschalen (2a, 2b, 2c) und in den Teilungsflächen (12a, 12b, 12c) wenigstens eines der einander zugewandten Schalenwandränder (11a, 11b, 11c) Nuten (13, 19a, 19b, 19c) für die Dichtungshalbringe (18a, 21) und die Dichtungsprofile (22b, 22c; 22a, 22b, 22c1;) angeordnet sind.

3. Rohranschlußteil nach Anspruch 2, dadurch gekennzeichnet, daß in den Teilungsflächen (12a, 12b, 12c) bei den einander zugewandten Schalenwandrändern (11a, 11b, 11c) Nuten (19a, 19b, 19c) einander gegenüberliegend angeordnet sind und die Höhe der Dichtungsprofile (22b, 22c; 22a, 22b, 22c1) mindestens der Summe der Tiefen der Nuten entspricht.

4. Rohranschlußteil nach Anspruch 2 oder 3, dadurch gekennzeichnet, daß die Nuten (13, 19a, 19b, 19c) ineinander übergehen.

5. Rohranschlußteil nach einem oder mehreren der vorhergehenden Ansprüche, dadurch gekennzeichnet, daß einer der beiden Halbschalen (1; 1a, 1b) zugehörigen Dichtungshalbringe (21) und Dichtungsprofile (22b, 22c; 22a, 22b, 22c1) einteilig miteinander verbunden sind.

6. Rohranschlußteil nach Anspruch 3 oder 4, dadurch gekennzeichnet, daß die Nuten (19a, 19b, 19c) und die Dichtungsprofile (22b, 22c; 22a, 22b, 22c1) sich bis in die Nähe oder bis zur Stirnseite der zugehörigen Stutzenhalbschalen (2a, 2b, 2c) erstrecken.

7. Rohranschlußteil nach einem oder mehreren der vorhergehenden Ansprüche, dadurch gekennzeichnet, daß die Dichtungshalbringe (21) und die Dichtungsprofile (22b, 22c; 22a, 22b, 22c1) fest mit den zugehörigen Halbschalen (1; 1a, 1b) verbunden sind.

8. Rohranschlußteil nach einem oder mehreren der vorhergehenden Ansprüche, dadurch gekennzeichnet, daß die Halbschalen (1; 1a, 1b) die Dichtungshalbringe (21) und die Dichtungsprofile (22b, 22c; 22a, 22b, 22c1) aus Kunststoff bestehen und vorzugsweise die Dichtungshalbringe sowie die Dichtungsprofile an die Halbschalen (1; 1a, 1b) angespritzt bzw. angeformt sind, insbesondere nach einem Zweikomponenten-Spritzgießverfahren.

9. Rohranschlußteil nach einem oder mehreren der vorhergehenden Ansprüche, dadurch gekennzeichnet, daß wenigstens eine oder beide der zueinander gehörigen Stutzenhalbschalen (2a, 2b, 2c) an der Innenwandung (17) eine der gewellten Außenkontur des Wellrohrs angepaßte Formgebung (18) aufweisen, die formschlüssig in die Außenkontur des Wellrohrs einfaßt.

10. Rohranschlußteil nach einem oder mehreren der vorhergehenden Ansprüche, dadurch gekennzeichnet, daß es drei Anschlußenden zur Ausbildung der Form eines T- oder Y-förmigen Abzweigs bzw. Verbinders aufweist.

11. Rohranschlußteil nach Anspruch 10, dadurch gekennzeichnet, daß alle drei Anschlußenden durch Anschlußstutzen mit Innenwandungen (17), die der Außenkontur des zugehörigen Wellrohrs angepaßte Formgebung (18) aufweisen, gebildet sind, wobei die Durchmesser der Anschlußstutzen ggfs. unterschiedlich sind.

12. Rohranschlußteil nach einem oder mehreren der vorhergehenden Ansprüche, dadurch gekennzeichnet, daß die Dichtungshalbringe (21) an ihren Innenflächen (23) einen oder mehrere, vorzugsweise zwei, halbkreisbogenförmige Dichtungsstege (18a) aufweisen, deren Querschnittsform und deren Abstand voneinander vorzugsweise an die Querschnittsform und den Abstand der Umfangsnuten des zugehörigen Wellrohrs angepaßt sind.

13. Rohranschlußteil nach einem oder mehreren der vorhergehenden Ansprüche, dadurch gekennzeichnet, daß die Formgebung an der Innenwandung (17) der jeweiligen Stutzenhalbschale (2a, 2b, 2c) durch wenigstens einen halbkreisbogenförmigen Arretiersteg (18) gebildet ist, der in einer Außenumfangsnut des zugehörigen Wellrohrs einzufassen vermag, und vorzugsweise in seiner Querschnittsform und -größe an die Querschnittsform und -größe der Umfangsnut angepaßt ist.

14. Rohranschlußteil nach Anspruch 13, dadurch gekennzeichnet, daß die Dichtungshalbringe (21) innenseitig von den zugehörigen Arretierstegen (18) angeordnet sind.

15. Rohranschlußteil nach einem oder mehreren der vorhergehenden Ansprüche, dadurch gekennzeichnet, daß die Dichtungsprofile (22b, 22c; 22a, 22b, 22c1) etwa hälftig in der zugehörigen Nut (19a, 19b, 19c) sitzen und etwa hälftig herausragen.

16. Rohranschlußteil nach einem oder mehreren der vorhergehenden Ansprüche, dadurch gekennzeichnet, daß bei einer Ausbildung als unsymmetrischer Abzweig die Dichtungsprofile (22a, 22b, 22c1) an der einen Halbschale (1b) komplett angeordnet und vorzugsweise mit den zugehörigen Dichtungshalbringen (21) verbunden sind, während in der anderen Halbschale (1a) die Dichtungsnuten (19a, 19b, 19c) vorgesehen sind.

17. Rohranschlußteil nach einem oder mehreren der vorhergehenden Ansprüche, dadurch gekennzeichnet, daß bei einer Ausbildung in Form eines unsymmetrischen Abzweigs mit einem geraden Durchgang die beiden Halbschalen (1a, 1b) an den sich parallel zueinander erstrekkenden Schalenwandrändern (11b) durch ein oder mehrere Filmscharniere (28a, 28b) miteinander verbunden sind.

18. Rohranschlußteil nach einem oder mehreren der vorhergehenden Ansprüche, dadurch gekennzeichnet, daß bei einer Ausgestaltung in Form eines symmetrischen Abzweigs an einem der beiden zu beiden Seiten der Längsmittelebene (8) angeordneten Schalenwandränder (11a, 11b) ein Dichtungsprofil (22b) angeordnet ist und an dem die beiden nebeneinander angeordneten Stutzenhalbschalen (2b, 2c) verbindenden Schalenwandrand (11c) ein Dichtungsprofil (22c) angeordnet ist, das sich von einem der beiden Dichtungshalbringe (21) nur bis zur Längsmittelebene (8) erstreckt, und daß die beiden Halbschalen (1) mit den Dichtungselementen einander gleich ausgestaltet sind.

19. Rohranschlußteil nach einem oder mehreren der vorhergehenden Ansprüche, dadurch gekennzeichnet, daß die Halbschalen (1; 1a, 1b) durch im Bereich der Schalenwandränder (11a, 11b, 11) zu beiden Seiten oder dem Filmscharnier gegenüberliegend angeordnete Verrastungselemente (27a, 27b) miteinander verbindbar sind.

## Claims

1. A pipe connection part for corrugated pipes, having at least two connection ends, at least one connection end of which is formed by a hollow cylindrical connecting sleeve, and having at least two half-shells (1; 1a, 1b) divided in at least one plane (4), which in their adjacent position, in which their shell wall edges (11a, 11b, 11c) lie side by side, can be connected to one another,
**characterised in that** a seal half-ring (18a, 21) made of elastic material is disposed in each sleeve half-shell (2a, 2b, 2c) and, in the closed state of the half-shells, a profiled joint (22b, 22c; 22a, 22b, 22c1) made from elastic material and extending in the longitudinal direction of the associated shell wall edges is disposed respectively between the mutually facing shell wall edges (11a, 11b, 11c) in the region of the dividing faces (12a, 12b, 12c), with the elastic material being made of a softer material than the half-shells.

2. A pipe connection part according to Claim 1,
**characterised in that** grooves (13, 19a, 19b, 19c) for the seal half-rings (18a, 21) and the profiled joints (22b, 22c; 22a, 22b, 22c1;) are disposed in the sleeve half-shells (2a, 2b, 2c) and in the dividing faces (12a, 12b, 12c) of at least one of the shell wall edges facing one another (11a, 11b, 11c).

3. A pipe connection part according to Claim 2,
**characterised in that** grooves (19a, 19b, 19c) are disposed opposite one another in the dividing faces (12a, 12b, 12c) in the case of the shell wall edges facing one another (11a, 11b, 11c) and the height of the profiled joints (22b, 22c; 22a, 22b, 22c1) corresponds to at least the sum of the depths of the grooves.

4. A pipe connection part according to Claim 2 or 3,
**characterised in that** the grooves (13, 19a, 19b, 19c) merge into one another.

5. A pipe connection part according to one or more of the preceding Claims,
**characterised in that** zeal half-rings (21) and profiled joints (22b, 22c; 22a, 22b, 22c1) associated with one of the two half-shells (1; 1a, 1b) are connected in one piece to one another.

6. A pipe connection part according to Claim 3 or 4,
**characterised in that** the grooves (19a, 19b, 19c) and the profiled joints (22b, 22c; 22a, 22b, 22c1) extend right into the vicinity or right to the end side of the associated sleeve half-shells (2a, 2b, 2c).

7. A pipe connection part according to one or more of the preceding Claims,
**characterised in that** the seal half-rings (21) and the profiled joints (22b, 22c; 22a, 22b, 22c1) are securely connected to the associated half-shells (1; 1a, 1b).

8. A pipe connection part according to one or more of the preceding Claims,
**characterised in that** the half-shells (1; 1a, 1b), the seal half-rings (21) and the profiled joints (22b, 22c; 22a, 22b, 22c1) are made of plastic and preferably the seal half-rings and also the profiled joints are injected or moulded onto the half-shells (1; 1a, 1b), in particular in accordance with a two-component injection moulding process.

9. A pipe connection part according to one or more of the preceding Claims,
**characterised in that** at the inner wall (17) at least one or both of the associated sleeve half-shells (2a, 2b, 2c) comprise a conformation (18) adapted to the corrugated outer contour of the corrugated pipe, which engages with form fit into the outer contour of the corrugated pipe.

10. A pipe connection part according to one or more of the preceding Claims,
**characterised in that** it comprises three connection ends to form the shape of a T-shaped or Y-shaped branch or connector.

11. A pipe connection part according to Claim 10,
**characterised in that** all three connection ends are formed by connecting sleeves having inner walls (17), which comprise the conformation adapted to the outer contour of the associated corrugated pipe, with the diameters of the connection sleeves being different where appropriate.

12. A pipe connection part according to one or more of the preceding Claims,
**characterised in that** at their inner faces (23) the seal half-rings (21) comprise one or more, preferably two, semi-circular seal webs (18a), the cross-sectional shape of which and the mutual spacing of which are preferably adapted to the cross-sectional shape and the spacing of the circumferential grooves of the associated corrugated pipe.

13. A pipe connection part according to one or more of the preceding Claims,
**characterised in that** the conformation at the inner wall (17) of the respective sleeve half-shell (2a, 2b, 2c) is formed by at least one semi-circular stop web (18), which can engage in an outer circumferential groove of the associated corrugated pipe, and its cross-sectional shape and size is preferably adapted to the cross-sectional shape and size of the circumferential groove.

14. A pipe connection part according to Claim 13,
**characterised in that** the seal half-rings (21) are disposed on the inside of the associated stop webs (18).

15. A pipe connection part according to one or more of the preceding Claims,
**characterised in that** roughly half of the profiled joints (22b, 22c; 22a, 22b, 22c1) is seated in the associated groove (19a, 19b, 19c) and roughly half protrudes.

16. A pipe connection part according to one or more of the preceding Claims,
**characterised in that** in the case of a design as an asymmetrical branch the profiled joints (22a, 22b, 22c1) are completely disposed at the one half-shell (1b) and are preferably connected to the associated seal half-rings (21), while the seal grooves (19a, 19b, 19c) are provided in the other half-shell (1a).

17. A pipe connection part according to one or more of the preceding Claims,
**characterised in that** in the case of a design in the form of an asymmetrical branch with a straight passage, the two half-shells (1a, 1b) are connected to one another by one or more integral hinges (28a, 28b) at the shell wall edges (11b) extending mutually parallel.

18. A pipe connection part according to one or more of the preceding Claims,
**characterised in that** in the case of a design in the form of a symmetrical branch, a profiled joint (22b) is disposed at one of the two shell wall edges (11a, 11b) disposed on either side of the longitudinal centre plane (8) and a profiled joint (22c), which extends from one of the two seal half-rings (21) only to the longitudinal centre plane (8), is disposed at the shell wall edge (11c) connecting the two sleeve half-shells disposed next to one another, and in that the two half-shells (1) with the seal components are constructed the same as one another.

19. A pipe connection part according to one or more of the preceding Claims,
**characterised in that** the half-shells (1; 1a, 1b) can be connected to one another by locking members (27a, 27b) disposed in the region of the shell wall edges (11a, 11b, 11) on either side of or opposite the integral hinge.

## Revendications

1. Elément de raccord pour tubes ondulés, comprenant au moins deux extrémités de raccordement dont l'une est constituée par une tubulure de raccordement cylindrique creuse, et au moins deux demi-coques (1; 1a, 1b) divisées dans au moins un plan (4) qui peuvent être réunies dans leur position assemblée dans laquelle leurs bords de paroi de coque (11a, 11b, 11c) sont appliqués les uns contre les autres, **caractérisé en ce** que dans chaque demi-coque de tubulure (2a, 2b, 2c) est disposé une demi-bague d'étanchéité (18a, 21) en matériau élastique et que, à l'état fermé des demi-coques, un joint d'étanchéité profilé (22b, 22c; 22a, 22b, 22c1) en matériau élastique est respectivement prévu entre les bords (11a, 11b, 11c) des parois de coques en regard, dans la région des surfaces de séparation (12a, 12b, 12c), le matériau élastique étant respectivement un matériau plus souple que celui des demi-coques.

2. Elément de raccord de tubes selon la revendication 1, caractérisé en ce que dans les demi-coques de tubulure (2a, 2b, 2c) et dans les surfaces de séparation (12a, 12b, 12c) d'au moins l'un des bords (11a, 11b, 11c) des parois de coques, sont prévues des rainures (13, 19a, 19b, 19c) pour les demi-bagues d'étanchéité (18a, 21) et les joints d'étanchéité profilés (22b, 22c; 22a, 22b, 22c1).

3. Elément de raccord de tubes selon la revendication 2, ca-ractérisé en ce que dans les surfaces de séparation (12a, 12b, 12c), sur les bords (11a, 11b, 11c) des parois de coques opposés, sont prévues des rainures (19a, 19b, 19c) disposées en regard les unes des autres, et que la hauteur des joints d'étanchéité profilés (22b, 22c; 22a, 22b, 22c1) correspond au moins à la somme des profondeurs desdites rainures.

4. Elément de raccord de tubes selon l'une des revendications 2 ou 3, caractérisé en ce que les rainures (13, 19a, 19b, 19c) se raccordent les unes aux autres.

5. Elément de raccord de tubes selon l'une quelconque des revendications précédentes, caractérisé en ce l'une des demi-bagues d'étanchéité (21) et des joints d'étanchéité profilés (22b, 22c; 22a, 22b, 22c1) associés à l'une des deux demi-coques (1; 1a, 1b) sont réunis en une seul pièce.

6. Elément de raccord de tubes selon l'une des revendications 3 ou 4, caractérisé en ce que les rainures (19a, 19b, 19c) et les joints d'étanchéité profilés (22b, 22c; 22a, 22b, 22c1) s'étendent jusqu'à proximité ou jusqu'à la face frontale des demi-coques de tubulure (2a, 2b, 2c) associées.

7. Elément de raccord de tubes selon l'une quelconque des revendications précédentes, caractérisé en ce que les demi-bagues d'étanchéité (21) et les joints d'étanchéité profilés (22b, 22c; 22a, 22b, 22c1) sont solidarisés avec les demi-coques associées (1; 1a, 1b).

8. Elément de raccord de tubes selon l'une quelconque des revendications précédentes, caractérisé en ce que les demi-coques (1; 1a, 1b), les demi-bagues d'étanchéité (21) et les joints d'étanchéité profilés (22b, 22c; 22a, 22b, 22c1) sont constitués de matière plastique, et que les demi-anneaux d'étanchéité ainsi que les joints d'étanchéité profilés sont de préférence moulés ou conformés sur les demi-coques (1; 1a, 1b), en particulier par un procédé de moulage par injection à deux composants.

9. Elément de raccord de tubes selon l'une quelconque des revendications précédentes, caractérisé en ce qu'au moins l'une ou les deux demi-coques de la tubulure (2a, 2b, 2c) associées présentent sur la paroi intérieure (17) une forme (18) adaptée au contour extérieur ondulé du tube ondulé et épousant à engagement positif le contour extérieur du tube ondulé.

10. Elément de raccord de tubes selon l'une quelconque des revendications précédentes, caractérisé en ce qu'il comprend trois extrémités de raccordement pour réaliser un branchement ou une connexion en T ou en Y.

11. Elément de raccord de tubes selon la revendication 10, caractérisé en ce que les trois extrémités de raccordement sont constituées par des tubulures de raccordement avec des parois intérieures (17) dont la forme (18) est adaptée au contour extérieur du tube ondulé associé, les diamètres des tubulures de raccordement pouvant éventuellement être différents.

12. Elément de raccord de tubes selon l'une quelconque des revendications précédentes, caractérisé en ce que les demi-bagues d'étanchéité (21) comportent sur leurs surfaces intérieures (23) une ou plusieurs, de préférence deux nervures d'étanchéité (18a) en demi-cercle dont la forme de la section transversale et l'écartement sont adaptés de préférence à la forme de la section transversale et à l'écartement des rainures circonférentielles du tube ondulé associé.

13. Elément de raccord de tubes selon l'une quelconque des revendications précédentes, caractérisé en ce que la paroi intérieure (17) de la demi-coque de tubulure (2a, 2b, 2c) respective comporte au moins une nervure d'arrêt (18) en demi-cercle qui peut s'engager dans une rainure périphérique extérieure du tube ondulé associé et dont la section transversale présente une forme et une grandeur adaptées de préférence à la forme et à la grandeur de la section transversale de la rainure périphérique.

14. Elément de raccord de tubes selon la revendication 13, caractérisé en ce que les demi-bagues d'étanchéité (21) sont disposées à l'intérieur des nervures d'arrêt (18) associées.

15. Elément de raccord de tubes selon l'une quelconque des revendications précédentes, caractérisé en ce que les joints d'étanchéité profilés (22b, 22c; 22a, 22b, 22c1) sont insérés à peu près à moitié dans la rainure (19a, 19b, 19c) associée et en dépassent à peu près à moitié.

16. Elément de raccord de tubes selon l'une quelconque des revendications précédentes, caractérisé en ce que, dans une variante sous forme de branchement asymétrique, les joints d'étanchéité profilés (22a, 22b, 22c1) sont disposés complètement sur l'une des demi-coques (1b) et reliés de préférence aux demi-bagues d'étanchéité (21) associées, tandis que les rainures d'étanchéité (19a, 19b, 19c) sont prévues dans l'autre demi-coque (1a).

17. Elément de raccord de tubes selon l'une quelconque des revendications précédentes, caractérisé en ce que, dans une variante sous forme de branchement asymétrique avec un passage droit, les deux demi-coques (1a, 1b) sont reliées entre elles sur les bords de paroi parallèles (11b) des coques, par une ou plusieurs charnières souples (28a, 28b).

18. Elément de raccord de tubes selon l'une quelconque des revendications précédentes, caractérisé en ce que, dans une variante sous forme de branchement symétrique, un joint d'étanchéité profilé (22b) est disposé sur l'un des deux bords de paroi (11a, 11b) des coques situés de part et d'autre du plan longitudinal médian (8), que sur le bord de paroi de coque (11c) reliant les deux demi-coques de tubulure (2b, 2c) juxtaposées est disposé un joint d'étanchéité profilé (22c) qui ne s'étend de l'un des deux demi-anneaux d'étanchéité (21) que jusqu'au plan longitudinal médian (8), et que les deux demi-coques (1) avec les éléments d'étanchéité sont identiques.

19. Elément de raccord de tubes selon l'une quelconque des revendications précédentes, caractérisé en ce que les demi-coques (1; 1a, 1b) peuvent être reliées entre elles par des éléments d'enclenchement (27a, 27b) disposés dans la région des bords de paroi de coque (11a, 11b, 11), de part et d'autre ou en face de la charnière souple.
